(19)

Europäisches
Patentamt
European
Patent Office
Office européen
des brevets

(11) **EP 2 398 235 A2**

(12) **EUROPEAN PATENT APPLICATION**

(43) Date of publication:
**21.12.2011 Bulletin 2011/51**

(51) Int Cl.:
***H04N 5/74*** *(2006.01)* ***H04N 13/00*** *(2006.01)*

(21) Application number: **11468002.8**

(22) Date of filing: **09.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.02.2010 US 302353 P**

(71) Applicant: **Bronstein Bronstein Kimmel Technologies Ltd.**
**34987 Haifa (IL)**

(72) Inventors:
• **Bronstein, Alexander**
**Haifa 34987 (IL)**

• **Bronstein, Michael**
**Lugano 6900 (CH)**
• **Kimmel, Ron**
**Haifa 34762 (IL)**

(74) Representative: **Vaughan, Christopher Tammo et al**
**Harrison Goddard Foote**
**Belgrave Hall**
**Belgrave Street**
**Leeds**
**LS2 8DD (GB)**

Remarks:
Pursuant to Rule 134 EPC the priority has been validly claimed.

(54) **Imaging and projection devices and methods**

(57) An imaging device is disclosed which may include at least one single pixel imaging sensor configured to sense image data for a single pixel along a line of sight. The imaging davice may also include at least one reoreintable mirror, of which each reorientable mirror is exclusively optically coupled to one or more of said at least one single pixel imaging sensor for deflecting the line of sight of that single pixel imaging sensor. The imaging device may further include a controller for synchronously reorienting each of said at least one reorientable mirror to scan the line of sight across at least a sector of a scene. The imaging device may also include a readout circuit for reading out acquired image data from each of said at least one single pixel imaging sensor. The imaging device may be configured to sample at least two independent dimensions of a four dimensional light field. A plenoptic imaging device and a plenoptic projector device are also disclosed.

Fig. 2

EP 2 398 235 A2

**Description**

FIELD OF THE INVENTION

The present invention relates to imaging. More specifically, the present invention relates to imaging and projecting devices and methods.

BACKGROUND

Standard lenses used in cameras and imaging and projection devices may typically focus only at a limited range of distances. Objects located at other distances from the lens will appear blurred. In practice, the decrease in sharpness is gradual on either side of the focused distance, and the interval of distances within which the degraded sharpness is imperceptible under normal viewing conditions is referred to as the Depth Of Field (DOF).
DOF is inversely proportional to the lens aperture diameter. Decreasing the aperture size, a lens is effectively turned into a pencil beam collimator, which in the limit has an infinite DOF (i.e., objects at all distances appear in focus). However, small apertures reduce the amount of light received by the film or the sensor, so it is impractical to achieve large DOFs with standard lenses.

SUMMARY OF THE INVENTION

There is thus provided, in accordance with embodiments of the present invention, an imaging device. The imaging device may include at least one single pixel imaging sensor configured to sense image data for a single pixel along a line of sight. The imaging device may also include at least one reoreintable mirror, of which each reorientable mirror is exclusively optically coupled to one or more of said at least one single pixel imaging sensor for deflecting the line of sight of that single pixel imaging sensor. The imaging device may further include a controller for synchronously reorienting each of said at least one reorientable mirror to scan the line of sight across at least a sector of a scene. The imaging device may also include a readout circuit for reading out acquired image data from each of said at least one single pixel imaging sensor. The imaging device may be configured to sample at least two independent dimensions of a four dimensional light field.
Furthermore, in accordance with embodiments of the present invention, the imaging device may further include at least one collimator each of which is configured to limit reception of incoming light to a predetermined angle of view, for each of said at least one single pixel imaging sensor.
Furthermore, in accordance with embodiments of the present invention, said at least one single pixel imaging sensor may include a plurality of single pixel imaging sensors.
Furthermore, in accordance with embodiments of the present invention, the plurality of single pixel imaging sensors may be arranged in a one-dimensional linear arrangement.
Furthermore, in accordance with embodiments of the present invention, the plurality of single pixel imaging sensors may include single pixel imaging sensors configured to respond to different wavelength ranges of incoming light.
Furthermore, in accordance with embodiments of the present invention, the plurality of single pixel imaging sensors may be arranged in a two-dimensional array.
Furthermore, in accordance with embodiments of the present invention, said at least one reoreintable mirror may include a plurality of reorientable mirrors, and wherein the controller is configured to control reorentation of each of said plurality of mirrors about at least two axes.
Furthermore, in accordance with embodiments of the present invention, said at least two axes may be orthogonal axes.
Furthermore, in accordance with embodiments of the present invention, a tilting angle of each of said at least one reorientable mirror may be modifiable, so as to allow increasing or decreasing the tilting angle.
Furthermore, in accordance with embodiments of the present invention, the readout circuit may be configured to sample image data from each of said at least one single pixel imaging sensor, so that the sampled image data is non-linearly related to orientation of said at least one reorientable mirror.
Furthermore, in accordance with embodiments of the present invention, the imaging device may further include an illumination source for illuminating the scene along the line of sight.
Furthermore, in accordance with embodiments of the present invention, the imaging device may further include an interferometer optically positioned along the line of sight.
Furthermore, in accordance with embodiments of the present invention, there is provided a plenoptic imaging device, which may include an array of single pixel imaging sensors each configured to sense image data for a single pixel along a line of sight. The plenoptic imaging device may also include an array of reoreintable mirrors, each of which is optically coupled to one or more of the single pixel imaging sensors of the array for deflecting the line of sight of each of the single pixel imaging sensors. The plenoptic imaging device may further include a controller for synchronously reorienting each of said reorientable mirrors to scan each of the lines of sight across at least a sector of a scene. The plenoptic imaging device may also include a readout circuit for reading out acquired image data from the array of single pixel imaging sensors. The plenoptic imaging device may be configured to sample at least three independent dimensions of a four dimensional light field.

Furthermore, in accordance with embodiments of the present invention, the array of single pixel imaging sensors may include single pixel imaging sensors configured to respond to different wavelength ranges of incoming light.

Furthermore, in accordance with embodiments of the present invention, a tilting angle of each of the reorientable mirrors may be modifiable, so as to allow increasing or decreasing the tilting angle.

Furthermore, in accordance with embodiments of the present invention, the readout circuit may be configured to sample image data from each of the single pixel imaging sensors, so that the sampled image data is non-linearly related to orientation of the reorientable mirrors.

Furthermore, in accordance with embodiments of the present invention, the plenoptic imaging device may further include an illumination source for illuminating the scene along at least one of the lines of sight.

Furthermore, in accordance with embodiments of the present invention, there is provided a plenoptic projector device, which may include an array of laser radiation sources each configured to project a light beam along a ray. The plenoptic projector device may also include an array of reoreintable mirrors, each of which is optically coupled to one or more of the laser radiation sources of the array for deflecting the ray of each of the laser radiatino sources. The device may further include a controller for synchronously reorienting each of said reorientable mirrors to sweep a sector in space by each of the rays. The device may still further include a modulation circuit for modulating intensity of the beam of each of the laser radiation sources. The projector device may be configured to reproduce at least three independent dimensions of a four dimensional light field.

Furthermore, in accordance with embodiments of the present invention, each of the laser radiation sources may include a plurality of laser radiation sources of different wavelengths.

Furthermore, in accordance with embodiments of the present invention, a tilting angle of each of the reorientable mirrors may be modifiable, so as to allow increasing or decreasing the tilting angle.

Furthermore, in accordance with embodiments of the present invention, the modulation circuit may be configured to change the intensity of the beam of one or more of the laser radiation sources in a timing sequence that is non-linearly related to orientation of the reorientable mirrors.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings. It should be noted that the figures are given as examples only and in no way limit the scope of the invention. Like components are denoted by like reference numerals.

Fig. 1 illustrates a theoretical imaging device with a single pixel imaging sensor and an aligned pencil collimator.

Fig. 2 illustrates an imaging device, in accordance with embodiments of the present invention, which includes a single pixel imaging sensor and a pencil collimator.

Fig. 3 illustrates an optical arrangement for an imaging device in accordance with embodiments of the present invention, with an imaging sensor line array and an aligned planar collimator.

Fig. 4 illustrates an imaging device in accordance with embodiments of the present invention, with a fiber optic optically linking the micro-mirror device from the imaging sensor.

Fig. 5 illustrates a color imaging device in accordance with embodiments of the present invention.

Fig. 6 illustrates a hyper-spectral imaging device in accordance with embodiments of the present invention.

Fig. 7 illustrates an imaging device in accordance with some embodiments of the present invention, with an incorporated range finder.

Fig. 8 illustrates a plenoptic imaging device in accordance with embodiments of the present invention, with a micro-mirror array.

Fig. 9 illustrates a plenoptic projector device in accordance with embodiments of the present invention, with a micro-mirror array.

Fig. 10 illustrates a projection scheme in accordance with embodiments of the present invention, showing how a projected 3D image may be seen from different angles of view.

Fig. 11 illustrates an incorporated imaging and projecting plenoptic device in accordance with embodiments of the present invention.

Fig. 12 illustrates acquisition of an image of a scene using a plenoptic imaging device and displaying an augmented image of the scene using a plenoptic projector device, in accordance with embodiments of the present invention.

Fig. 13 illustrates a method of imaging, in accordance with embodiments of the present invention.

DETAILED DESCRIPTION

Light field is a function that describes the amount of light traveling in every direction through every point in space, and can be parameterized by five parameters (point coordinates x,y,z + direction $\varphi,\theta$), resulting in a five-dimensional (5D) function $L(x,y,z,\varphi,\theta,\lambda)$, where L represents light intensity from x,y,z in the direction $\varphi,\theta$ at wavelength $\lambda$ (which is considered here as a parameter rather than additional sixth dimension of the light field). In what follows, we will omit the dependence on the wavelength whenever possible.

Assuming no occlusions or optical interferences are present in space, the amount of light along each direction $\varphi,\theta$ is the same. Thus, the five dimensional representation of the light field function is redundant, and effectively the light field can be described by four parameters, for example, by parametrizing two planes u,v and s,t (u.v being a position coordinate in one plane and s,t being a position coordinate in the other plane).

A plenoptic camera (also known as light-field camera) is a conceptual camera system that allows capturing four-dimensional (4D) light field information of a scene. Typical plenoptic camera designs use a 2D camera array (a plurality of cameras arranged in a two-dimensional matrix) or a microlens array to capture 4D light field.

The resulting light field can be represented as an 2D array of images, each acquired by a single camera of the camera array (or a single lens of the microlens array). In this representation, the coordinates u,v represent the position of the camera in the array, and the coordinates t,s represent the position of a pixel in the image acquired by that camera.

Such light field information can be used in computational photography, e.g. in the following applications:

A. Light field/image based rendering. By extracting appropriate two-dimensional (2D) slices from the 4D light field of a scene, one may produce novel views of the scene (this is generally referred to as image-based rendering). Depending on the parameterization of the light field and slices, these views may be, for example, perspective, orthographic, crossed-slit, multi-perspective, or another type of projection.

B. Synthetic aperture photography. By integrating an appropriate 4D subset of the samples in a light field, one can approximate the view that would be captured by a camera having a finite (i.e. non-pinhole) aperture. Such a view has a finite depth of field. By shearing or warping the light field before performing this integration, one can focus on different fronto-parallel or oblique planes in the scene.

A traditional (non plenoptic) camera can be considered as a trivial setting of the plenoptic camera array with a single camera. Such a camera is capable of capturing only two dimensions of the 4D light field.

Reproducing the 4D light field is conceptually possible by reversing the direction of rays in a plenoptic camera and replacing light sensors by light sources, arranged in a projector array. The reproduced light fields when viewed by a human observer allows achieving a full 3D illusion of an object. The trivial setting of such a projection array device is a single projector, capable of reproducing two dimensions of the light field, which are perceived as a 2D image.

In accordance with embodiments of the present invention it is proposed to replace the camera array by an array of micro-mirrors, each exclusively optically connected to a controlled light source.

In the context of the present invention the term "light" is understood to mean any electromagnetic radiation, including (but not limited to) visible light, infrared light, ultraviolet light. The term "plenoptic" referring to a device is understood to mean a device capable of acquiring (sampling) or reproducing an approximation of a light field of a scene at a set of directions not lying in a single plane.

In some embodiments of the present invention described hereinafter imaging devices having a single mirror and one or a plurality of single pixel sensors are described, for simplicity. Devices with a plurality of mirrors are later described.

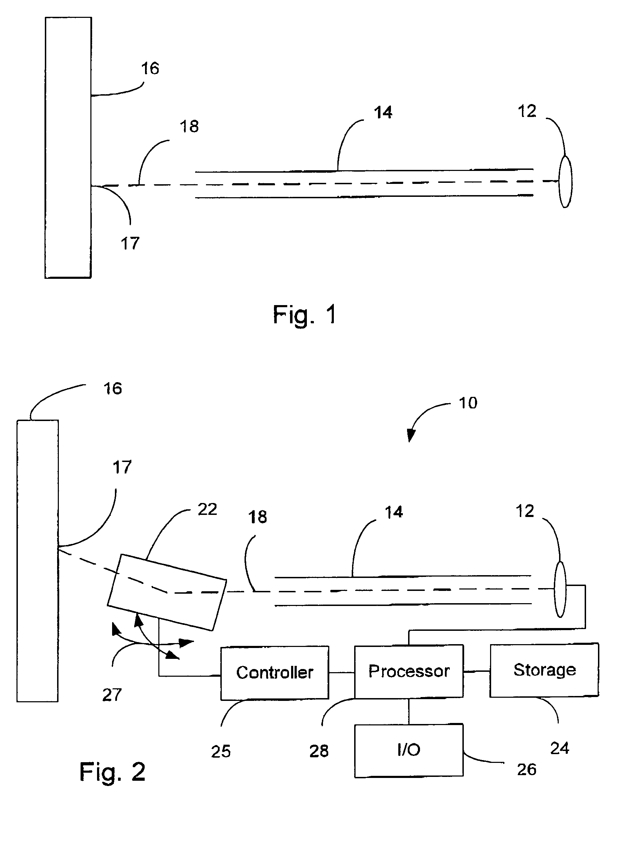

Theoretically, one can envisage a camera consisting of a single pixel sensor (such as, for example, a photodiode 12 aligned with a pencil collimator 14 (see Fig. 1). Such a theoretical device is capable of imaging a narrow region 17 (ideally a point) of an object 16 lying along the optical axis 18 of the collimator. Since the area spanned by the photodiode can be made relatively large, the amount of photons collected is sufficient to obtain high signal-to-noise ratio.

By sweeping a desired sector of view, for example in a raster scan, and recording the responses of the photodiode, an image may be obtained. The main property of such an image is that it has a very large (ideally, infinite) DOF. The acquisition of pixels by such a camera may be staged in time, somewhat resembling the action of an electronic rolling shutter implemented in some CMOS sensors.

In accordance with embodiments of the present invention, an imaging device may include at least one single pixel imaging sensor configured to sense image data for a single pixel along a line of sight. The device may also include at least one reoreintable mirror, of which each reorientable mirror is exclusively optically coupled to one or more of said at least one single pixel imaging sensor for deflecting the line of sight of that single pixel imaging sensor. The device may further include a controller for synchronously reorienting each of said at least one reorientable mirror to scan the line of sight across at least a sector of a scene. The device may also include a readout circuit for reading out acquired image data from each of said at least one single pixel imaging sensor. The imaging device may be configured to sample at least two independent dimensions of a four dimensional light field.

As the components of the theoretical optical system shown in Fig. 1 have prohibitively large inertia, it is impractical to rotate the entire system with sufficient accuracy at sufficient speed. Instead, proposed here is a different design which is conceptually depicted in Fig. 2, illustrating an imaging device 10, in accordance with embodiments of the present invention. Instead of rotating the camera a rotatable or otherwise reorientable mirror, such as micro-mirror 22, may be placed along the optical axis 18 of the collimator 14. Since the micro-mirror 22 may be designed to possess tiny inertia, it can be moved with precision at megahertz frequencies.

The micro-mirror device 22 may be designed to rotate about two orthogonal axes 27, so as to allow scanning the imaged sector in a tow dimensional manner.

In some embodiments of the present invention, the micro-mirror device may be designed to rotate about a single axis, and thus facilitate one-dimensional scanning of the imaged object (along a single axis). In other embodiments of the present invention, the micro-mirror device may be designed to rotate about a plurality of orthogonal or non-orthogonal axes.

An example of a micro-mirror device suitable for use in an imaging device in accordance with embodiments of the present invention may include, for example, MEMS (Micro-ElectroMechanical-System) scanning micro-mirror manufactured by Microvision ™ (Redmond, Washington, US), which is a silicon device at the center of which a tiny mirror is located. The mirror is connected to small flexures allowing it to oscillate. A two-dimensional (2D) MEMS scanning mirror device may rotate about two orthogonal axes to capture an image pixel by pixel. The maximal angle of rotation of the micro-mirror determines the field of view of the imaging device, in accordance with embodiments of the present invention. An exemplary micro-mirror device manufactured by Microvision is capable of rotating the mirror about two perpendicular axes in steps at a frequency of about 12 MHz.

The proposed imaging device does not require lenses, which is likely to significantly reduce the production cost.

The imaging device may further include processor 28, for processing image date received by sensor 12, storage device 24, for storing image data (raw data, or processed data), and for storing software code (e.g. an application for execution by the processor of the imaging device). The imaging device may also include controller 25, for controlling the operation of micro-mirror device 22 (direction and/or angle of tilt).

Imaging sensor 12 may be configured to sample image date at a frequency matching to the operation frequency of the micro-mirror 22, so as to efficiently and smoothly cover the imaged sector. For example, a video camera scanning at 30 frames per second (fps) with spatial resolution of, for example, 1080*1920, would have to vibrate the mirror at rates of about 30Hz along one axis and for a spatial resolution of 1080*30, the camera would vibrate at about 30KHz along the other axis. Scanning in both scanning directions of the moving mirror could reduce scanning rates in half

In accordance with some embodiments of the present invention the micro-mirror is configured to rotate about two planes. A pencil collimator is placed between the micro-mirror and the imaging sensor, which in embodied in the form of a single photodiode (one pixel). At every point in time, the imaging device is configured to acquire a single pixel image along a single ray, and multiple pixels are obtained by sweeping the scene with the ray and sampling pixels of the image during the sweep motion. In order to obtain a complete image of an entire scene, the ray sweeps the scene and pixels are sampled in an orderly manner (or at least at a known order)

One simple sweeping scheme may be raster scanning. Other scanning schemes may be used, such as for example as described in the following section.

In another embodiment of the present invention a single mirror may be replaced by an optical system comprising two mirrors each allowed to rotate about a single axis in such a way that together they may deflect light in two independent directions.

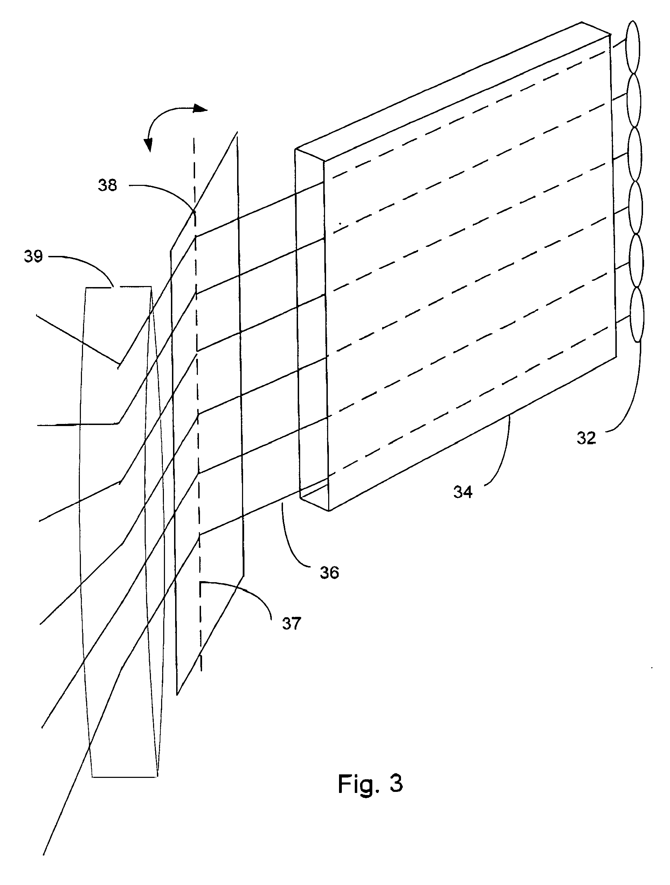

Fig. 3 illustrates an optical arrangement for an imaging device in accordance with embodiments of the present invention, with an imaging sensor line array 32 and an aligned plane collimator 34. In accordance with embodiments of the present invention the micro-mirror 38 is allowed to rotate about a single plane (about axis 37). A plane collimator 34 is placed between the micro-mirror and the imaging sensor, which is embodied as a linear row of single pixel sensors 32. In order to achieve focus of the pixels along the line, the micro-mirror may be shaped to have a cylindrical section or curvature in a desired direction. In other embodiments of the present invention, a cylindrical lens 39 may be placed between the micro-mirror and collimator or in front of the micro-mirror. At every point in time, the camera is able to acquire a single line of pixels of a selected sector of view. Multiple lines may be obtained by sweeping the scene with the plane.

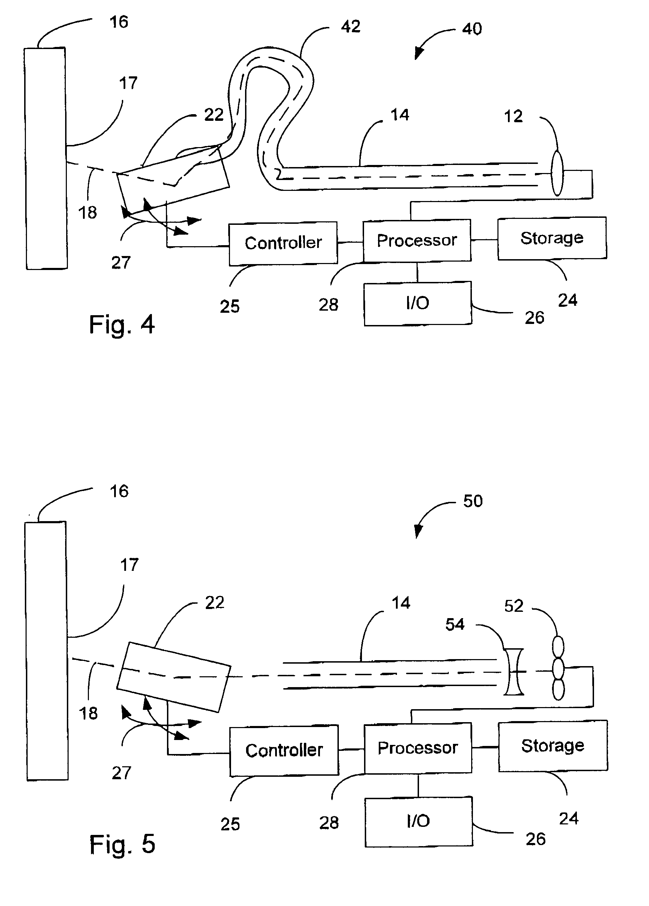

In accordance with some embodiments of the present invention, as depicted in Fig. 4, an imaging device 40 is shown in which fiber optic 42 separates the micro-mirror 22 from the collimator 14 and the imaging sensor 12. In some embodiments of the present invention it may be possible to omit the collimator and optically link the micro-mirror 22 to imaging sensor 12 using fiber optic 13 without collimator 14 (in fact, fiber optic 13 serves is a kind of a collimator, as it collimates light passing through it). This design permits the provision of a sensing head which may be remote from the main body of the imaging device so as to serve as a miniature probe. This design may be used, for example, in endoscopic applications or other applications which require a small probe. A light source may be placed on the optical axis of the imaging device to illuminate the imaged object.

In accordance with embodiments of the present invention, a control sub-system may be used to control the position of the micro-mirror and to record the signal received from the sensor. In what follows, we assume for simplicity that the optical system implements the moving ray setting (as shown in Fig. 1), although the described methods and systems may be used for other embodiments as well. A controller may allow setting a sequence of the angular positions of the micro-mirror, which may include a scan pattern and the angular step, as well as the exposure time of the sensor at each position. Different image scanning methods can be used in accordance with embodiments of the present invention by modifying the above parameters, for example:

A. Raster scan with fixed angular step.

B. Holographic sampling. The scan order may be driven by a holographic sampling hash function, which guarantees that every small subset of pixels covers the region of interest approximately uniformly. In this manner, the imaging device may be made to produce a stream of pixels, accumulation of which progressively improves the image resolution.

C. Variable zoom. By increasing or decreasing the angular step, the imaging device may acquire wider or narrower angular tilt, which is equivalent to zooming out and in, without having to use a costly zoom lens.

D. Region of interest. The micro-mirror may be made to achieve a wide range of possible angular positions, only a subset of which is used during image acquisition, effectively creating a region of interest in which the image is sampled. The simplest form of the region of interest is a rectangle, but other more complex forms consisting of multiple disconnected regions may be achieved. The region of interest may be determined by a higher-level computer vision algorithm such as object detection and tracking operating on a low resolution and low frame rate full angular aperture image.

E. Virtual Pan-Tilt-Zoon (PTZ). By combining holographic sampling with variable zoom techniques (see B and C above), a replacement of a costly PTZ lens may be realized. Moreover, an imaging device according to embodiments of the present invention may have multiple regions of interests with different zoom levels, which is cannot be achieved by standard PTZ lenses. The determination of PTZ settings in an imaging device according to embodiments of the present invention may be performed by a higher-level computer vision algorithm.

F. Variable resolution- The angular velocity of the mirror may change non-uniformly at different pixels of the image, effectively over-sampling or under-sampling different regions of the imaged object. The resolution of the sampling of the image may be determined by a higher-level image processing or computer vision algorithm operating on a low-resolution image. For example, objects of interest such as faces may be detected in the image and assigned higher resolution. Alternatively, the readout circuit may sample the signal produced by the sensor non-uniformly in time. In other words, the sampling of image data from the sensor (or sensors) is non-linearly related to orientation of the reorientable mirror.

G. Variable frame rate and resolution. The frequency of the micro-mirror displacement may limit the budget (i.e. number) of pixels the imaging device may produce per second. This budget can be allocated in various schemes of space and time producing low-frame rate high-resolution or high-frame rate low-resolution imaging (e.g. video). An imaging device according to embodiments of the present invention may dynamically trade off these parameters either at frame or region or pixel levels. For example, regions with fast motion can be acquired at higher frame rates, while static regions may be acquired at lower frame rates.

H. Variable dynamic range. By controlling exposure time, an imaging device according to embodiments of the present invention may acquire a sequence of frames at different exposures effectively producing a high dynamic range image. Dynamic range may vary in space and time. By "exposure time" it is meant the time a photodiode is sampled/reset for photons count. Moreover, by slowing down the scanning rate, and extending photon integration time per pixel, one could keep the spatial resolution, while obtaining a sharp and clean image even at low lighting conditions.

I. Variable exposure. By controlling exposure time at pixel level, the imaging device may perform non-linear transformations of the dynamic range and adapt them both in space and time. For example, pixels belonging to dark regions may be assigned higher exposure times, while pixels in bright regions may be exposed for shorter exposure times. The determination of exposure time may be handled by a higher-level image processing algorithm working e.g. on a lower resolution image.

Various optical devices allow transforming an image to a transformation domain (e.g. Fourier transform). An example of an optical device used to transform an image to a transformation domain is a converging lens. By placing a transforming optical device in front of the imaging device, the sampling performed by the imaging device may become frequency domain sampling. Sampling patterns different from the standard Cartesian sampling are known to be advantageous, such as for example, compressive sensing techniques, reconstruction of a better image from the same number of samples or same quality image from a smaller number of samples. Below, several examples of scan patterns are proposed:

1. Raster scan.

2. Spiral sampling: progressively increasing the sampling frequency and thus the resolution.

3. Holographic sampling in the frequency domain.

4. Polar sampling: similar to one used in CT (Computerized Tomography). Reconstruction is possible by using, for example, the inverse Radon transform, filtered back projection, or convex optimization techniques.

5. Pseudo-polar sampling and reconstruction method introduced by A. Averbuch et al in "Accurate and Fast Discrete Polar Fourier Transform", Journal on Applied and Computational Harmonic Analysis, Vol. 21, pp.145-167, 2006.

Other transforms achieved by optical devices may be implemented as well in an imaging device in accordance with embodiments of the present invention.

Color acquisition by an imaging device in accordance with embodiments of the present invention may be achieved by placing a set of three photodiodes with red, green, and blue filters. Since the physical dimensions of the photodiodes may exceed the width of the ray, a diffuser may be placed between the collimator and the photodiodes to ensure the ray coming out of the collimator is spread over a bigger area. An example of such arrangement is illustrated in Fig. 5, where a color imaging device 50 in accordance with embodiments of the present invention, is depicted. Three single-pixel imaging sensors 52 (e.g. photodiodes) are used, configured to respond different colors (e.g. red, green and blue). A diffuser 34 is placed between the collimator 14 and the photodiodes 32 so as to expand the optical beam emerging from the collimator onto the photodiodes so as to cast that beam onto all three photodiodes. In the context of the present invention "color" is meant to refer to different wavelength ranges of incoming light and is not limited to the perceptual notion of color associated with the human visual system.

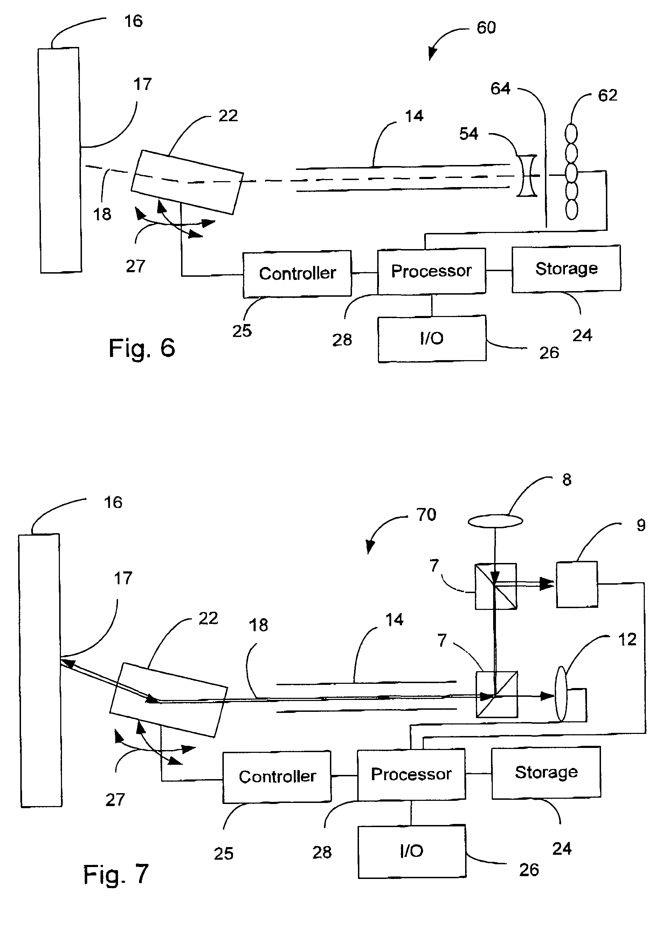

Fig. 6 illustrates another imaging device according to embodiments of the present invention. The imaging device 60 includes a one-dimensional sensor array 62 (instead of the single photodiode). A dispersing optical element, such as, for example, a prism or a diffraction grid 64 may be placed between the collimator 14 and the sensor array 62, so that different wavelengths of light dispersed by the prism or the grid arrive at different pixels of the sensor. This allows assigning each pixel of the image a vector of values representing the spectral content of the light at different wavelengths and turns the device into a hyper-spectral imaging device.

Fig. 7 illustrates an imaging device in accordance with some embodiments of the present invention, with an incorporated range finder. On the optical axis of the imaging device 70, a source of illumination 8 (e.g. laser source) is placed, part of whose beam is deflected to an interferometer 9. A narrow range 17 on object 16 is illuminated by the illuminating beam, part of which is reflected back into the optics of the imaging device and directed to the interferometer, creating an interference pattern from which the phase difference between the emitted and reflected light can be inferred. This allows determination of the depth of the object, offering range finding capabilities.

Embodiments of the present invention may also include a plurality of mirrors and corresponding imaging sensors, as well as illumination sources, optical elements and electronic circuits. This may allow for fuller acquisition or reproduction of light field information as demonstrated henceforth.

In accordance with embodiments of the present invention, a plenoptic imaging device may include an array of single pixel imaging sensors each configured to sense image data for a single pixel along a line of sight. The plenoptic imaging device may further include an array of reoreintable mirrors, each of which is optically coupled to one or more of the single pixel imaging sensors of the array for deflecting the line of sight of each of the single pixel imaging sensors. The plenoptic imaging device may also include a controller for synchronously reorienting each of said reorientable mirrors to scan each of the lines of sight across at least a sector of a scene. The plenoptic imaging device may also include a readout circuit for reading out acquired image data from the array of single pixel imaging sensors. The plenoptic imaging device may be configured to sample at least three independent dimensions of a four dimensional light field.

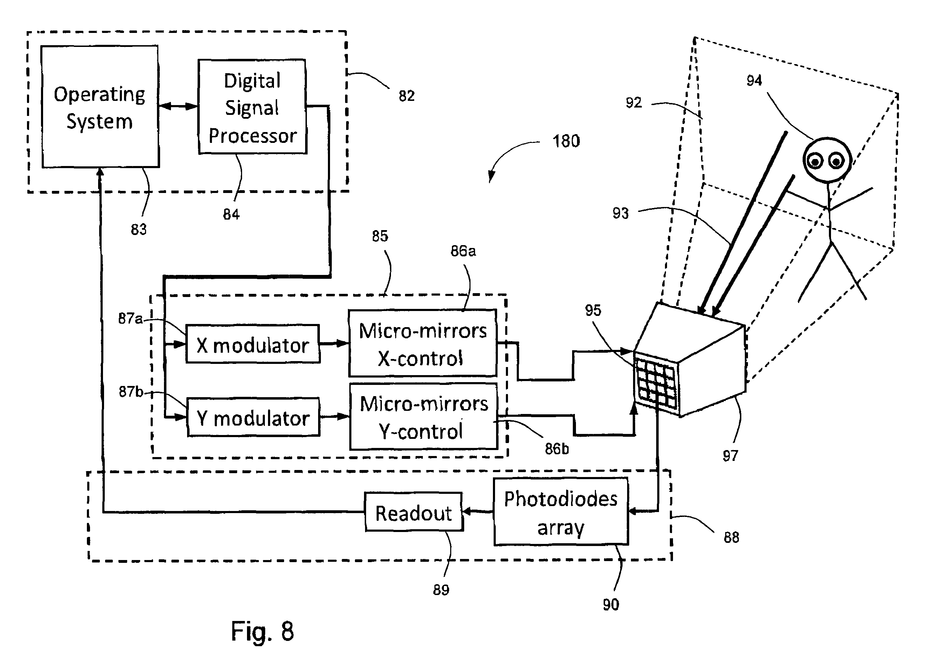

Fig. 8 illustrates a plenoptic imaging device in accordance with embodiments of the present invention, with a micro-mirror array.

Imaging device 180 may include a micro-mirror array 95 (which may be provided with hood 97, which may resemble, for example a lens hood). Micro-mirror array 95 may be connected to micro-mirror steering control 85, in which X modulator 87a, through micro-mirror X control 86a, controls movement of the micro-mirrors of array 95 in X axis, whereas Y modulator 87b, through micro-mirror Y control 86b, controls movement of the micro-mirrors in Y axis (X and Y being orthogonal). The imaging device may further include processing unit 82, which may include operating system 83 and digital signal processor 84. Steering control 85 may be operated by processing unit 82 (e.g. digital signal processor 84).

Light reflected from scene 92, which includes object 94 is collected by tilting the micro-mirrors in a predetermined manner configured to scan a plurality of sectors of the scene by the micro-mirrors, In accordance with some embodiments of the present invention, each micro-mirror may be exclusively assigned a sector. In other embodiments of the present invention, overlapping between sectors in the scanning by the micro-mirrors may occur.

The imaging device may further include readout control 88, which may include photodiode array, e.g. imaging sensors such as, for example, Charge Coupled Device (CCD), Complementary Metal Oxide Semiconductor (CMOS), in which each sensor is exclusively optically coupled to a corresponding mirror of the micro-mirror array 95, and readout arrangement 89 configured to readout image data from the photodiode array and pass it to processing unit 82 (e.g.

operating system 83) for processing. The imaging device 180 may thus acquire three or more independent dimensions of the light field of an imaged scene.

The plenoptic imaging device, according to embodiments of the present invention, effectively samples a 4D light field function of the imaged scene along a set of rays corresponding to each mirror, and in accordance to the chosen scan scheme. In the context of the present invention, "sampling" of a four-dimensional light field $L(u,v,s,t;\lambda)$ is understood as producing a discrete set of values $\{L(u_i,v_i,s_i,t_i;\lambda_i)\}$ for $\{(u_i,v_i,s_i,t_i;\lambda_i)\}$ i=1,...,n being a set of parameters. By "m independent dimensions" it is understood that the parameters u,v,s, and t are in turn parametrized as function of m independent parameters $\{p_1,...,p_m\}$ sampled at n discrete values $\{p_{ki}\}$, k=1,...,m, i=1,...,n, such that the sampled light field is the set $\{L(u(p_{li},..., p_{mi}),v(p_{li},..., p_{mi}),s(p_{li},..., p_{mi}),t(p_{li},..., p_{mi});\lambda_i)\}$.

The plenoptic imaging device may include single pixel imaging sensors configured to respond to different wavelength ranges of incoming light.

The tilting angle of each of the reorientable mirrors of the plenoptic imaging device may be modifiable, so as to allow increasing or decreasing the tilting angle.

The readout circuit of the plenoptic imaging device may be configured to sample image data from each of the single pixel imaging sensors, so that the sampled image data is non-linearly related to orientation of the reorientable mirrors. This can be achieved by non-linearly varying the mirror orientation, or non-uniformly sampling the signal read out from the single pixel imaging sensors (since each sampling time of the signal corresponds to a specific mirror orientation), or both. This effectively allows varying the spatial resolution and density of the rays along which the light field is sampled.

The plenoptic imaging device may include an illumination source for illuminating the scene along at least one of the lines of sight.

While the above description (relating to Figs. 1-8) is directed to various embodiments of the present invention which are all characterized as being imaging devices, the present invention may also be implemented in the field of computational photography, in particular, plenoptic imaging based on capturing the light field describing a scene, as detailed henceforth.

According to embodiments of the present invention a plenoptic projector device may include an array of laser radiation sources each configured to project a light beam along a ray. The plenoptic projector device may also include an array of reoreintable mirrors, each of which is optically coupled to one or more of the laser radiation sources of the array for deflecting the ray of each of the laser radiatino sources. The plenoptic projector device may further include a controller for synchronously reorienting each of said reorientable mirrors to sweep a sector in space by each of the rays. The plenoptic projector device may also include a modulation circuit for modulating intensity of the beam of each of the laser radiation sources. The projector device may be configured to reproduce at least three independent dimensions of a four dimensional light field.

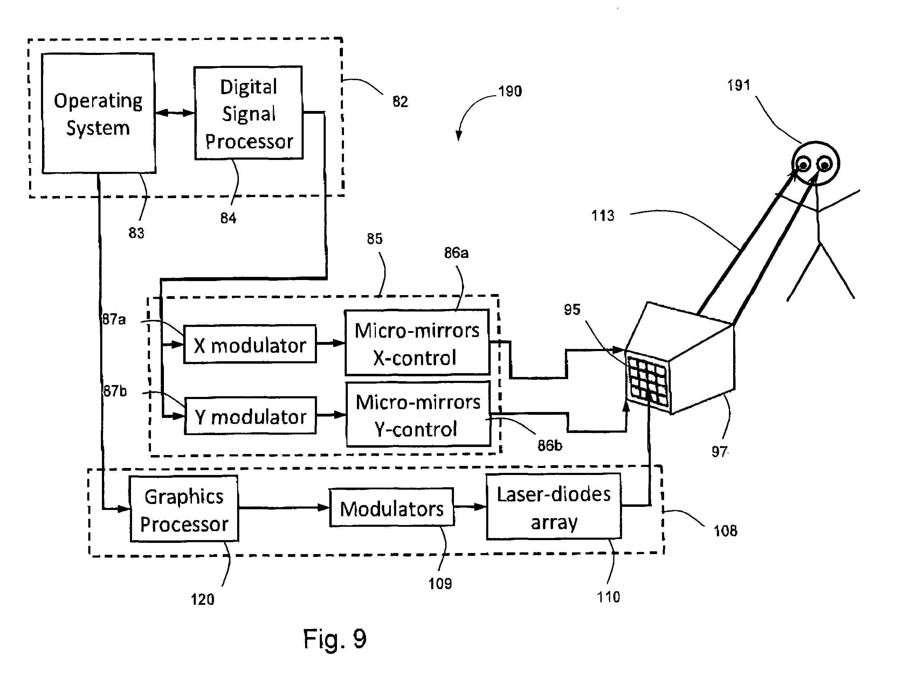

Fig. 9 illustrates a plenoptic projector device in accordance with embodiments of the present invention, with a micro-mirror array.

The plenoptic projector device 190 may include processing unit 82, which may include operating system 103 and digital signal processor 84. 4D image data, which may have been acquired using an imaging device, such as the one illustrated in Fig. 8 and described hereinabove on another imaging device, or synthetically generated image data, such as, for example, computer simulated image, is generated by the processing unit, and micro-mirror array control 85 (which may include X modulator 87a, micro-mirror X-control 86a, Y modulator 87b, micro-mirror Y-control 106b) is commanded to cause micro-mirrors of micro-mirror array 95 (which may be provided with hood 97) to tilt in a predetermined sequence over time so as to direct light from laser-diodes array 110 in predetermined directions. The intensity, color and other optical characteristics of the light emitted from each laser-diode of the laser-diodes array 110 may each exclusively be modulated by modulators 109, receiving appropriate data and commands from graphic processor 120, which itself may receive data and commands from processing unit 102.

Thus light of predetermined characteristics is scanned at predetermined directions by the micro-mirror array 115 so as to present a 4D light field which may be observed by beholder 191.

The plenoptic projector device, according to embodiments of the present invention, effectively reproduces a 4D light field function approximated by a superposition of light intensities along a set of rays corresponding to each mirror, and in accordance to the chosen scan scheme. "Reproduction" of a four-dimensional light field $L(u,v,s,t;\lambda)$ is generally understood as filling a region of the space with light beams of different intensities and traveling in different directions in such a way that the intensity of light at a set of points in space parameterized by (u,v,s,t) at wavelength $\lambda$ is equal to $L(u,v,s,t;\lambda)$. In the context of the present invention we will however imply approximation of the latter function by a superposition of a set of n rays

$$L(u,v,s,t;\lambda) \approx I_1\delta(u-u_1,v-v_1,s-s_1,t-t_1)\delta(\lambda-\lambda_1)+\ldots+I_n\delta(u-u_n,v-v_n,s-s_n,t-t_n)\delta(\lambda-\lambda_n)$$

where $\delta$ denote the Dirac delta function (impulse) or its approximation, $\{(u_i,v_i,s_i,t_i;\lambda_i)\}$ i=1,...,n is a set of parameters, and the set of intensities $\{I_i\}$ is the discrete representation of the light field (sampled light field). We will say that a device reproduced "m independent dimensions" of the light field implying that the parameters u.v,s, and t are in turn parametrized by functions of m independent parameters $\{p_1,...,p_m\}$ sampled at n discrete values $\{p_{ki}\}$, k=1,...,m, i=1,...,n.

The controllers driving each of the mirrors effectively produce time sequences of the parameters u,v,s, and t. The modulation circuit effectively produces a time sequence of the intensity values I.

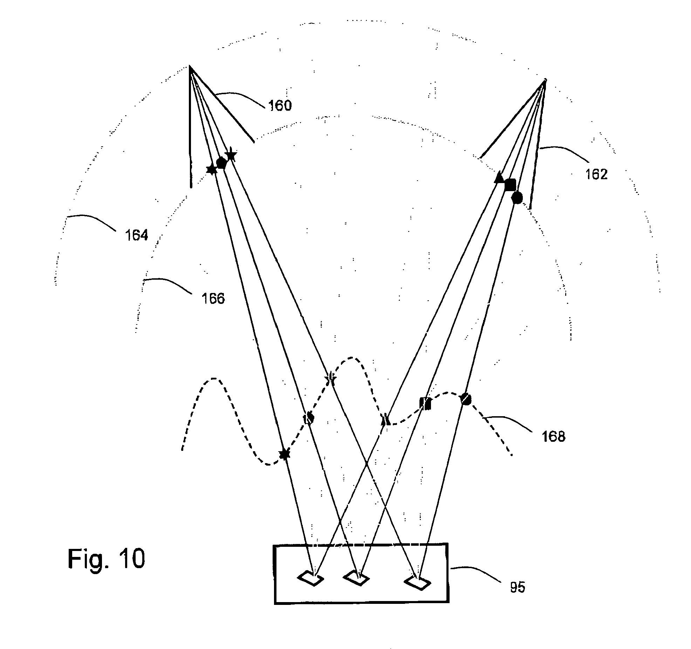

Fig. 10 illustrates a projection scheme in accordance with embodiments of the present invention, showing how a projected light field may be observed from different angles of view.

By applying a predetermined projection scheme which includes providing modulated light generated from an array of light emitters (e.g. laser-diodes array 95) and scanned in a predetermined scheme by a micro-mirror array, such as described hereinabove, a light pattern 168 is projected in a three-dimensional manner so as to cause different beholders (represented in the figure in the form of eyes 160 and 162, located at different positions about a virtual visual range 166, and having virtual focal points 164) positioned at different angles with respect to the projector's micro-mirror array 95) to see the light pattern and visualize its three-dimensional aspects (depicted in this figure in the form of different little shapes).

The plenoptic projector device may include laser radiation sources each of which includes a plurality of laser radiation sources of different wavelengths, so as to allow production of different colors.. In the context of the present invention, the term "laser radiation source" is not limited to a monochromatic source of coherent light and also includes a plurality of monochromatic light sources producing laser light at different wavelengths optically coupled to produce a single beam of coherent radiation that bears energy at different wavelengths.

The reorientable mirrors of the plenoptic projector device may have a tilting angle which is modifiable, so as to allow increasing or decreasing the tilting angle.

The modulation circuit of the plenoptic projector device may be configured to change the intensity of the beam of one or more of the laser radiation sources in a timing sequence that is non-linearly related to orientation of the reorientable mirrors.

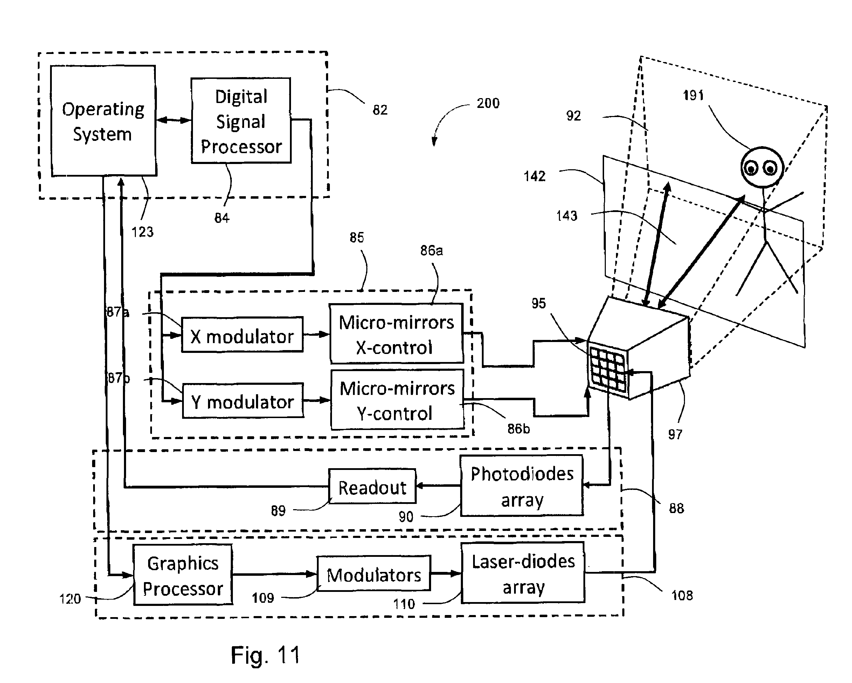

Fig. 11 illustrates an incorporated imaging and projecting plenoptic device 200 in accordance with embodiments of the present invention, the components of which are described with reference to the preceding Fig. 8 and Fig. 9. Thus the device may acquire image data of scene 92 and reproduce it by projecting image data to beholder 191, making the beholder view the scene in a 3D manner. A diffuser 142 may be provided between the micro-mirror array and the beholder, to smooth the approximation of the light field as it is sampled or reproduced by the set of rays corresponding to the mirrors and the scanning scheme. In other embodiments of the present invention, similar smoothing effect may be achieved by placing a diffusing element directly in front of the laser light source or sensing photodiodes, or directly in front of the mirrors. Alternatively, the mirrors may be made with a predetermined curvature so as to spread incident light. The imaged scene may be illuminated by light emitted from laser diodes 110 coaxially along the line of sight of each mirror. The light emitted by the illumination source is reflected from the mirror, illuminates the scene, and scatters from objects in the scene. It then impinges up the mirror where it may be collected by a photodiode. This allows delivering significant luminous energy only to points on objects in the scene that are being acquired by the imaging device at a present point of time and constitutes a lower power alternative to standard flash lighting that illuminates the entire scene.

In some embodiments of the above invention, the light source may be a pulsed source, whereas in other embodiments of the present invention the light source may be a continuous light source.

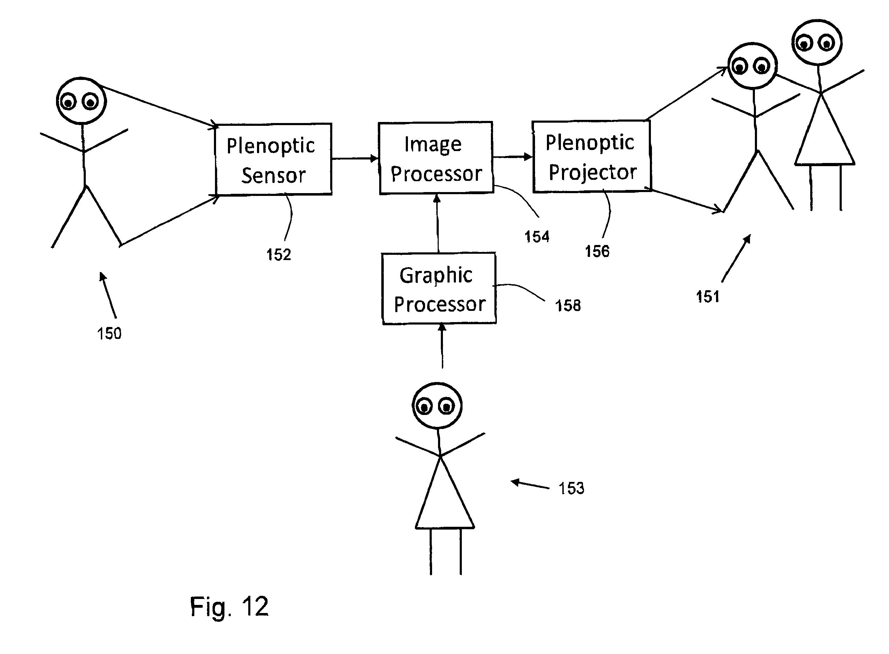

Fig. 12 illustrates acquisition of an image of a scene using a plenoptic imaging device and displaying an augmented image of the scene using a plenoptic projector device, in accordance with embodiments of the present invention.

An 3D image of scene 150 may be acquired by a plenoptic imaging device such as plenoptic sensor 152. The 3D image data may be forwarded to image processor 154.

A synthetic 3D image data 153 of a virtual object or scene may be generated by graphic processor 158 and forwarded to image processor 154.

Image processor 154 may combine the 3D image of scene 150 with the 3D image data 153 of the virtual object and plenoptic projector 156 may project the combined 3D image.

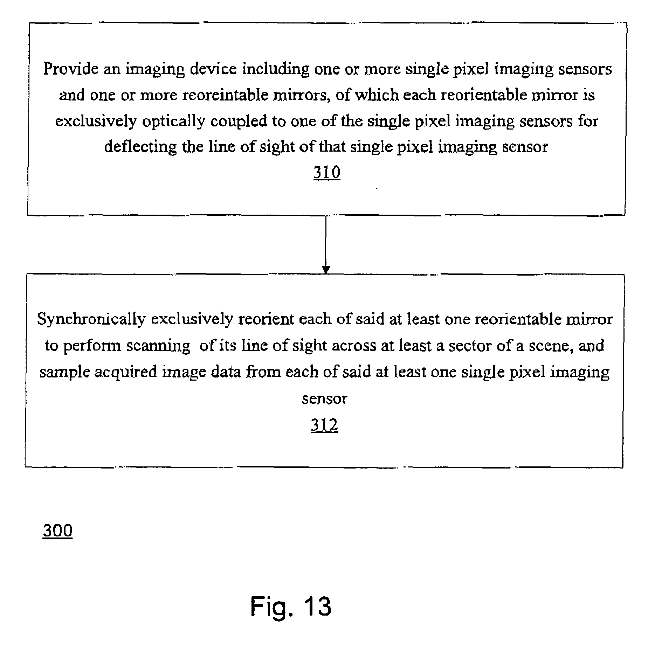

Fig. 13 illustrates a method of imaging, in accordance with embodiments of the present invention.

Such method 300 may include providing 310 an imaging device that includes one or more single pixel imaging sensors configured to sense image data for a single pixel along a line of sight, one or more reoreintable mirrors, of which each reorientable mirror is exclusively optically coupled to one of the single pixel imaging sensors for deflecting the line of sight of that single pixel imaging sensor. The method may also include synchronously exclusively reorienting 320 each of the reorientable mirrors to performing scanning of its line of sight across at least a sector of a scene, and sampling acquired image data from each of the sensors.

Aspects of the present invention may be embodied as a computer program product saved on one or more non-transitory computer-readable mediums in the form of computer-readable program code embodied thereon. For example, the computer-readable medium may be a computer-readable non-transitory storage medium. A computer-readable storage medium may be, for example, an electronic, optical, magnetic, electromagnetic, infrared, or semiconductor system, apparatus, or device, or any combination thereof.

Computer program code of the above described embodiments of the invention may be written in any suitable programming language. The program code may execute on a single computer, or on a plurality of computers.

The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

## Claims

1. An imaging device, comprising:

   at least one single pixel imaging sensor configured to sense image data for a single pixel along a line of sight;

   at least one reoreintable mirror, of which each reorientable mirror is exclusively optically coupled to one or more of said at least one single pixel imaging sensor for deflecting the line of sight of that single pixel imaging sensor;

   a controller for synchronously reorienting each of said at least one reorientable mirror to scan the line of sight across at least a sector of a scene; and

   a readout circuit for reading out acquired image data from each of said at least one single pixel imaging sensor,

   wherein the imaging device is configured to sample at least two independent dimensions of a four dimensional light field.

2. The device of claim 1, further comprising at least one collimator each of which is configured to limit reception of incoming light to a predetermined angle of view, for each of said at least one single pixel imaging sensor.

3. The device of claim 1, wherein said at least one single pixel imaging sensor comprises a plurality of single pixel imaging sensors.

4. The device of claim 3, wherein the plurality of single pixel imaging sensors are arranged in a one-dimensional linear arrangement.

5. The device of claim 3, wherein the plurality of single pixel imaging sensors include single pixel imaging sensors configured to respond to different wavelength ranges of incoming light.

6. The device of claim 3, wherein the plurality of single pixel imaging sensors are arranged in a two-dimensional array.

7. The device of claim 3, wherein said at least one reoreintable mirror comprises a plurality of reorientable mirrors, and wherein the controller is configured to control reorentation of each of said plurality of mirrors about at least two axes.

8. The device of claim 7, wherein said at least two axes are orthogonal axes.

9. The device of claim 1, wherein a tilting angle of each of said at least one reorientable mirror is modifiable, so as to allow increasing or decreasing the tilting angle.

10. The device of claim 1, wherein the readout circuit is configured to sample image data from each of said at least one single pixel imaging sensor, so that the sampled image data is non-linearly related to orientation of said at least one reorientable mirror.

**11.** The device of claim 1, further comprising an illumination source for illuminating the scene along the line of sight.

**12.** The device of claim 1, further comprising an interferometer optically positioned along the line of sight.

**13.** A plenoptic imaging device, comprising:

an array of single pixel imaging sensors each configured to sense image data for a single pixel along a line of sight;
an array of reoreintable mirrors, each of which is optically coupled to one or more of the single pixel imaging sensors of the array for deflecting the line of sight of each of the single pixel imaging sensors;
a controller for synchronously reorienting each of said reorientable mirrors to scan each of the lines of sight across at least a sector of a scene; and
a readout circuit for reading out acquired image data from the array of single pixel imaging sensors,
wherein the imaging device is configured to sample at least three independent dimensions of a four dimensional light field.

**14.** The device of claim 13, wherein the array of single pixel imaging sensors includes single pixel imaging sensors configured to respond to different wavelength ranges of incoming light.

**15.** The device of claim 13, wherein a tilting angle of each of the reorientable mirrors is modifiable, so as to allow increasing or decreasing the tilting angle.

**16.** The device of claim 13, wherein the readout circuit is configured to sample image data from each of the single pixel imaging sensors, so that the sampled image data is non-linearly related to orientation of the reorientable mirrors.

**17.** The device of claim 13, further comprising an illumination source for illuminating the scene along at least one of the lines of sight.

**18.** A plenoptic projector device, comprising:

an array of laser radiation sources each configured to project a light beam along a ray;
an array of reoreintable mirrors, each of which is optically coupled to one or more of the laser radiation sources of the array for deflecting the ray of each of the laser radiatino sources;
a controller for synchronously reorienting each of said reorientable mirrors to sweep a sector in space by each of the rays; and
a modulation circuit for modulating intensity of the beam of each of the laser radiation sources, wherein the projector device is configured to reproduce at least three independent dimensions of a four dimensional light field.

**19.** The device of claim 18, wherein each of the laser radiation sources includes a plurality of laser radiation sources of different wavelegths.

**20.** The device of claim 18, wherein a tilting angle of each of the reorientable mirrors is modifiable, so as to allow increasing or decreasing the tilting angle.

**21.** The device of claim 18, wherein the modulation circuit is configured to change the intensity of the beam of one or more of the laser radiation sources in a timing sequence that is non-linearly related to orientation of the reorientable mirrors.

16

18

14

12

17

## Fig. 1

16

10

17

22

18

14

12

27

Controller

Processor

Storage

25

28

I/O

24

## Fig. 2

26

Fig. 3

Fig. 4

Fig. 5

Fig. 6

Fig. 7

Fig. 8

Digital Signal Processor

Operating System

82

84

83

85

86a

86b

Micro-mirrors X-control

Micro-mirrors Y-control

X modulator

Y modulator

87a

87b

Photodiodes array

Readout

88

90

89

180

92

93

94

95

97

Fig. 9

Fig. 10

Fig. 11

Fig. 12

Provide an imaging device including one or more single pixel imaging sensors and one or more reoreintable mirrors, of which each reorientable mirror is exclusively optically coupled to one of the single pixel imaging sensors for deflecting the line of sight of that single pixel imaging sensor

310

Synchronically exclusively reorient each of said at least one reorientable mirror to perform scanning of its line of sight across at least a sector of a scene, and sample acquired image data from each of said at least one single pixel imaging sensor

312

300

# Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. AVERBUCH et al.** Accurate and Fast Discrete Polar Fourier Transform. *Journal on Applied and Computational Harmonic Analysis,* 2006, vol. 21, 145-167